# EUROPEAN PATENT APPLICATION

(11) **EP 0 764 875 A1**
(43) Date of publication of application: **26.03.1997**
(21) Application number: 96306778.0
(22) Date of filing: 18.09.1996
(51) Int. Cl.: G03B 21/10, H04N 5/74, G03B 21/62

(54) **Multiscreen displaying apparatus and screen fitting structure**

(30) Priority: 21.09.1995 JP 243187/95; 05.03.1996 JP 47470/96
(71) Applicant: KABUSHIKI KAISHA TOSHIBA, Kawasaki-shi, Kanagawa-ken 210 (JP)
(72) Inventor: Furuya, Keizo, Fukaya-shi, Saitama-ken,366 (JP)
(74) Representative: Waldren, Robin Michael

(57) **Abstract**

In the structure of a multiscreen displaying apparatus, a set of units 20 is formed by piling unit displays 21A and 21B so that Fresnel lenses 23A and 23B are vertically arranged. One lenticular lens 10 is installed on the front of the Fresnel lenses 23A and 23B of each unit. Then protruded jaw parts 11 are provided at the upper and lower ends of the lenticular lens 10, and the lenticular lens 10 covers the Fresnel lenses 23A and 23B by hanging the jaw part 11 on the outer side of screen fitting frames 22A and 22B. Furthermore, in order to obtain vertical tension, a leaf spring 15 or the like is inserted between the jaw part 11 and the fitting frames 22A and 22B (hanging parts). It is possible to form a stereoscope by arranging plural units 20.

Furthermore, the screen fitting structure of the projection units is that a casing type fitting frame 70 is installed on the side of the back of a screen 60. Metal fittings 81 for supporting is fixed to an inclined part 72 of a fitting frame 70 by screws 82. Fixing pieces 61 provided at the ends of a screen 60 are supported by the metal fittings 81 for supporting and the screen 60 is held between an engaging part 71 of the fitting frame 70 and the metal fittings 81 for supporting. By applying force in the direction of pushing out the screen 60 except the vertical direction at the inclined parts 72 and 81B, the screen 60 is held securely.

## Description

### Background of the Invention

### Field of the Invention:

The present invention relates to a multiscreen displaying apparatus which can easily form a stereoscope by some unit displays and to a screen fitting structure used for a projection unit using a transparent screen.

### Description of the Related Art:

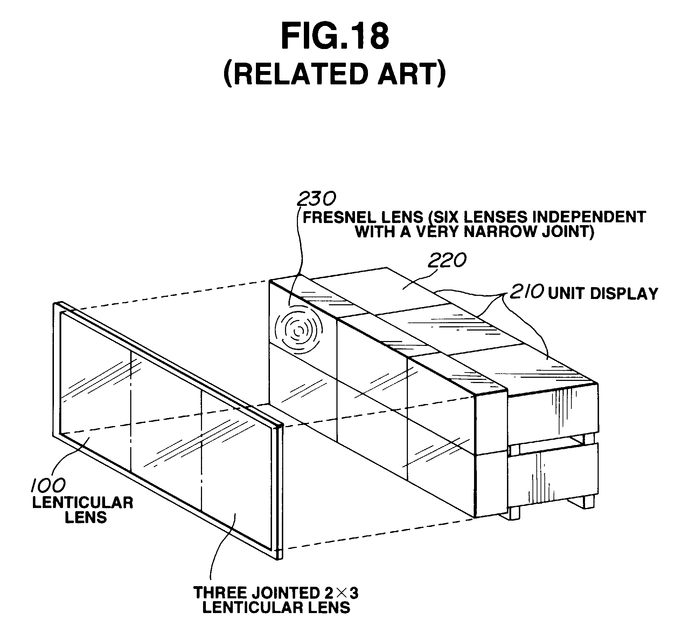

A multiscreen display is formed by vertically and horizontally arranging plural unit displays to obtain a large screen. Fig. 18 shows a structure of a multiscreen display.

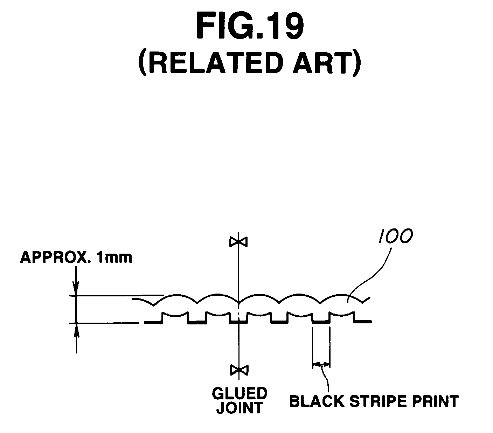

Fig. 18 illustrates a multiscreen display consisting of six unit displays. Fig. 19 shows a joint part of a lenticular lens 100 of Fig. 18.

As shown in Fig. 18, a large screen consisting of six unit displays is formed by piling unit displays. Each unit display 210 is provided with a cabinet 220 in which an optical system (not shown) is stored and a Fresnel lens 230 on which an image is enlarged and projected by the optical system. The Fresnel lens 230 is held by screen pressing metal fittings and a screen fitting frame, for example.

Furthermore, as shown in Fig. 18, a multiscreen is formed by covering unit displays 210 with a lenticular lens 100 to make the joint part small.

In such a multiscreen displaying apparatus, the lenticular lens 100 having a large flat surface as shown in Fig. 18 should be prepared. Making of this lenticular lens 100 requires high technique in bonding and jointing some longitudinal lenticular lenses. For example, in case of three unit displays and two unit displays arranged horizontally and vertically respectively as shown in Fig. 18, it is necessary to bond three lenticular lenses in the horizontal direction, the height of which is twice the Fresnel lenses 230. The lenticular lens 100 is about 1mm thick, as shown in Fig. 19, and the cross section of it has a complex corrugated form. The technique to horizontally bond them is very high and expensive.

Furthermore, as the screen consists of the Fresnel lenses 230 and the lenticular lenses 100, if they are not bonded closely, it will be impossible to obtain sufficient lens effect. A clear image will not be obtained and/or the image will be distorted. Therefore, tension is applied to the lenticular lenses 100 to stretch the lenticular lenses 100. That is, force is applied in the outer direction of the lenticular lenses 100 to eliminate space between the Fresnel lenses 230 and the lenticular lenses 100 and to obtain a large flat surface.

For example, the screen structure that the lenticular lenses 100 are fixed by applying tension is disclosed in Patent Application No. Heisei 6-260714 (Japanese Patent Laid-open No.122918/1996) in which the applicant of this invention applied to the Japanese Patent Office in Oct. 25, 1994.

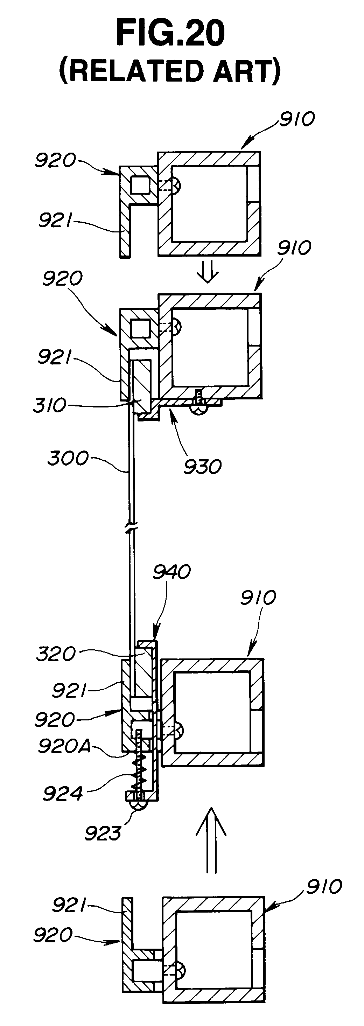

In Fig. 20, a first fitting frame 910 is placed on the back side of a screen 300, and a second fitting frame 920 is placed surrounding the outer periphery of the screen 300. The second fitting frame 920 is provided with an engaging part 921 to engage one side of the screen 300. While the lower end of a fixing piece 310 provided at the upper part of the screen 300 is held by a holding member 930, a holding member 940 is hung up on the upper end of a fixing piece 320 provided at the lower part of the screen 300. In addition, a spring 924 and a screw 923 are provided between a bottom face 920A of the second fitting frame 920 and a holding member 940. It is possible to adjust the position of the lower end of the screen 300 together with the holding member 940 and the fixing piece 320 by screwing the screw 923 in and out, and thereby the screen 300 is held applying tension in the vertical direction of the screen 300.

With the structure as shown in Fig. 20, it is possible to apply a uniform tension to the screen 300 by the holding member 930 provided at the upper end and the holding member 940 provided at the lower end. This is because a uniform tension can be applied to the screen 300 at the end surface of the holding member 940 by placing a spring 924 in the holding member 940.

Even though the structure according to Patent Application No. Heisei 6-260714 (Japanese Patent Laid-open No.122918/1996) is suitable as an attaching structure of a large-sized screen, it is complex as the structure for attaching a middle-sized screen. Since it is somewhat trouble in simplicity and operability as the structure for attaching a middle-sized screen, further improvement is required.

### Summary of the Invention

A first object of the present invention is to provide a multiscreen displaying apparatus and a screen fitting structure which enable plural unit displays to be piled up vertically and a stereoscope to be formed by dividing the lenticular lens to make it small.

A second object of the present invention is to provide a screen fitting structure in a projection unit using a comparatively large screen, which can apply tension to the screen and easily adjust the tension and is also suitable for attaching a middle-sized screen.

A first embodiment according to the present invention is a multiscreen displaying apparatus in which plural sets of units are arranged, said multiscreen displaying apparatus comprising;
said each set of units in which plural unit displays having Fresnel lenses on the front respectively are arranged vertically or horizontally,
a lenticular lens which is placed opposite to said each set of units respectively to form a screen with said Fresnel lens, and
a holding means for applying tension to said lenticular lens and holding said lenticular lens to cover the Fresnel lens of said each set of units.

Thus, it is possible to form a multiscreen displaying apparatus by plural sets of units and to make the lenticular lens covering each set of units small.

A second embodiment according to the present invention relates to a concrete structure of said holding means, wherein said holding means is provided with a jaw part at the upper and lower ends of said lenticular lens, the jaw part is hung up on the upper and lower ends of said each set of units, and plural springs are inserted between said jaw part and the upper or lower end of said units and tension is applied vertically to said lenticular lens.

A third embodiment according to the present invention also relates to a concrete structure of said holding means, wherein said holding means is provided with a jaw part at the upper and lower ends of said lenticular lens, the jaw part is hung up with a screw with a spring on the upper and lower ends of said each set of units, and tension is applied vertically to said lenticular lens by the force of said spring.

Furthermore, in a fourth embodiment according to the present invention, said jaw part of said holding means is divided into three parts, the spring constants of the springs of said screws are set so that the jaw parts positioned at both ends are attached to said each set of units much stronger than the jaw part at the center.

Furthermore, in a fifth embodiment according to the present invention, the length of the central jaw part of three parts into which said jaw parts are divided is longer than that of the jaw parts at both ends.

It is possible to attach the lenticular lens stably to said each set of units by the fourth and fifth embodiments.

In a sixth embodiment according to the present invention, a stereoscope is formed by arranging said each set of units in a circular arc form as a whole in the first embodiment.

In a seventh embodiment according to the present invention, both of left and . right ends of said Fresnel lenses and said lenticular lenses are attached to said unit displays with wires respectively to prevent the left and right ends of said lenticular lenses from being loosened.

In an eighth embodiment according to the present invention, the surfaces of said lenticular lenses are covered with protective layers to protect the surfaces of the lenticular lenses.

A ninth embodiment according to the present invention has a connecting means for connecting said Fresnel lenses and said unit displays which form said each set of units.

In a tenth embodiment according to the present invention, adhesive tape is used as said connecting means.

In an eleventh embodiment according to the present invention, as said connecting means, plural metal fittings are used in which one end of the metal fittings is fixed to the outer periphery of said unit and the other end is extended almost even to the front of said lenticular lens.

The fitting condition of the Fresnel lenses is stabilized by the tenth and eleventh embodiments and it is possible to prevent light from leaking from the joint between each set of units.

A twelfth embodiment according to the present invention is a multiscreen displaying apparatus in which plural sets of units are arranged, said multiscreen displaying apparatus comprising;
said each set of units in which plural unit displays having Fresnel lenses on the front respectively are arranged vertically or horizontally,
a lenticular lens which is placed opposite to said each set of units respectively to form a screen with said Fresnel lens, and
plural black stripes which are provided on the front of said each lenticular lens and placed continuously from one terminating part to the other terminating part of said each lenticular lens in the direction that said each set of units is arranged to partially shield external light.

Thus it is possible to prevent the light from being reflected irregularly on the end of each unit and to make the joint between each set of units unnoticeable.

A thirteenth embodiment according to the present invention is a screen fitting structure for a projecting type image receiver in which a screen is placed at a predetermined interval from the projecting unit and the light of an image from said projecting unit is enlarged and projected on the front of said screen, said screen fitting structure comprising:
a casing type fitting frame attached to the outer periphery of said screen;
a supporting means for attaching said screen to said fitting frame by applying tension in a first direction of directing to the outer periphery of the screen and a direction toward the front of the screen, and
a holding means including a position controlling means for controlling an attaching position of said screen to said fitting frame and for attaching said screen to said fitting frame by applying tension in a direction opposite to said first direction and a direction toward the front of the screen.

Thus it is possible not only to hold said screen by vertically applying tension, but also to attach it to said fitting frame by pressing it.

A fourteenth embodiment according to the present invention relates to a concrete structure of said supporting means in the thirteenth embodiment, said supporting means comprising:
a first fixing piece attached to one end on the side of said first direction of the back of said screen;
an engaging part united with said fitting frame and extended so as to surround the outer periphery on the side of the front of said screen;
a first inclined part united with said fitting frame and extended incliningly in the direction from the back side of the outer periphery of said screen to said first fixing piece, and
a supporting member in which one end of it supports said first fixing piece and the other end is fixed at said first inclined part by a screw.

A fifteenth embodiment according to the present invention relates to the concrete structure of said holding means in the thirteenth embodiment, said holding means comprising:
a second fixing piece attached to one end on the opposite side of said first direction of the back of said screen,
an engaging part united with said fitting frame and extended so as to surround the outer periphery on the side of the front of said screen,
a second inclined part united with said fitting frame and extended incliningly in the direction from the back side of the outer periphery of said screen to said second fixing piece,
a holding member in which one end of it holds said second fixing piece and the other end is fixed to said second inclined part, and
a screw with a spring for fixing said holding member to said second inclined part.

In the fourteenth and fifteenth embodiments, it is possible not only to hold said screen by vertically applying tension, but also to attach it to the side of the engaging part of said fitting frame by pressing it.

Furthermore, a sixteenth embodiment according to the present invention relates to another concrete structure of said holding member, the holding member having a contacting part which is in contact with said fitting frame by extending the end fixed to said second inclined part, wherein the holding member can be attached stably.

In a seventeenth embodiment according to the present invention, the part surrounding the outer periphery of said screen of said fitting frame is made hollow to improve the strength of the fitting frame.

### Brief Description of the Drawings

Fig. 1 is an exploded perspective view showing a multiscreen displaying apparatus according to the present invention.

Fig. 2(a) is an enlarged view of the upper end of a lenticular lens of Fig. 1.

Fig. 2(b) is an enlarged view of the upper end on the side of the cabinet of Fig. 1.

Figs. 3(a) and (b) are views showing the detailed structure of the jaw part at the upper end and a part on the side of the cabinet in Fig. 2.

Figs. 4(a) and (b) are views showing another structure of the jaw part at the upper end and a part on the side of cabinet in Fig. 2.

Fig. 5 is a view in case of forming a stereoscope by arranging units of Fig. 1.

Fig. 6 is a view showing the structure of black stripes with which a lenticular lens is provided.

Fig. 7(a) is a view in which a unit consists of quadruple unit displays.

Fig. 7(b) is an enlarged view of a structure to prevent the lenticular lens of Fig. 7(a) from being loosened.

Fig. 8 is a variation view of the structure of Fig. 2.

Fig. 9 is another example of the structure of a multiscreen displaying apparatus.

Fig. 10 is a view showing the structure in which a protective layer is provided on the front of a lenticular lens.

Fig. 11(a) is a view showing an attaching part of a Fresnel lens of a unit display.

Fig. 11(b) is a cross section view taken along a line X-X of Fig. 11(a).

Fig. 12 is a view showing an example that metal fittings are provided on the outer periphery of a lenticular lens in case of arranging the unit displays of Fig. 11.

Fig. 13 is a view showing a screen fitting structure for a projection unit according to the present invention.

Fig. 14 is a cross section view showing a supporting part of Fig. 13.

Fig. 15 is a cross section view showing another example of the supporting part of Fig. 13.

Fig. 16 is a cross section view showing a holding part of Fig. 13.

Fig. 17 is a cross section view showing another example of the holding part of Fig. 13.

Fig. 18 is a sketch drawing of a conventional multiscreen display.

Fig. 19 is a view showing a lenticular lens part of Fig. 18.

Fig. 20 is a view showing an attaching structure of a conventional screen for a large-sized projection unit.

### Detailed Description of the Preferred Embodiments

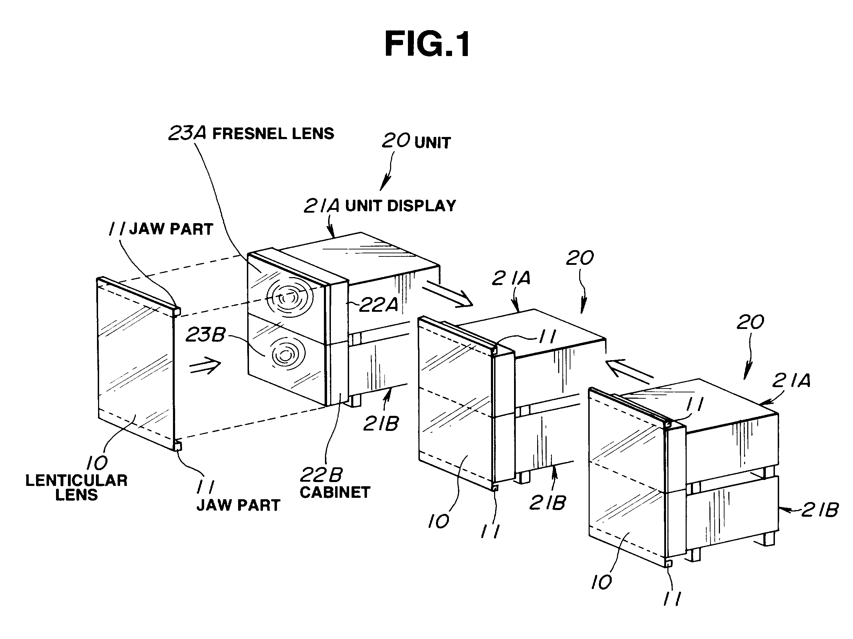

Fig. 1 is a view showing a multiscreen display and a screen fitting structure of an embodiment according to the present invention.

As shown in Fig. 1, double unit displays 21A and 21B arranged in the vertical direction are formed as a unit 20. A unit 20 forms a first means. A lenticular lens 10 is provided to cover Fresnel lenses 23A and 23B of the unit displays 21A and 21B. The lenticular lens 10 forms a screen as a second means with Fresnel lenses 23A and 23B. The size of the lenticular lens 10 is larger than that of the unit 20 and the jaw parts 11 are bonded to the inner surfaces of the upper and lower ends. The jaw parts 11 form a holding means. The distance between the jaw parts 11 provided at both ends is the size of the lenticular lens 10. Therefore, the jaw parts 11 are hung up on the upper and lower ends of the cabinet of the unit 20, and the lenticular lens 10 is held with an application of tension. A holding means consists of jaw part 11 and outer parts of the cabinet of the unit displays 21A and 21B. Moreover, 22A and 22B are the cabinets of the unit displays 21A and 21B respectively. The jaw parts 11 consist of, for example, metal materials or resin materials having strength to some extent.

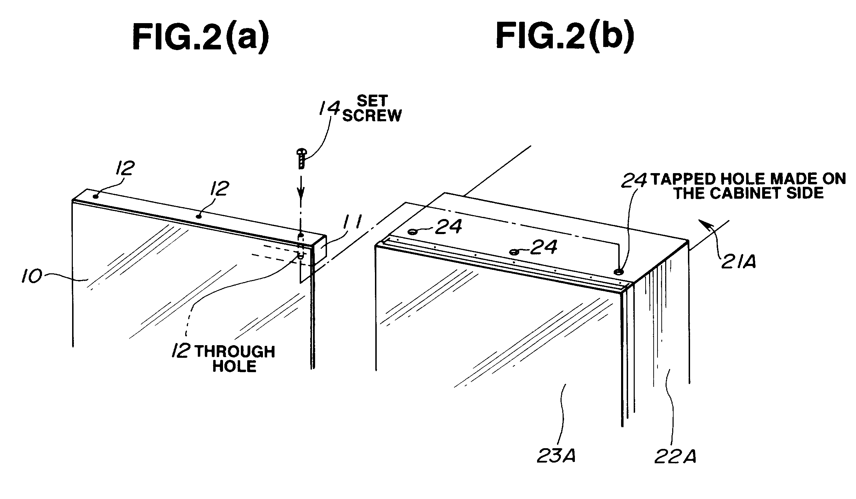

The holding means consisting of the jaw parts 11 provided on the lenticular lens 10 and the cabinets of the unit displays 21A and 21B are described in detail referring to an enlarged view. Figs. 2(a) and 2(b) are the views of the upper jaw part of the lenticular lens and on the side of the cabinet corresponding to it.

The jaw part 11 is bonded to both sides of the lenticular lens 10. However, in Figs. 2(a) and (b), only the jaw part 11 on the upper side is shown. The jaw part 11 is provided with through holes 12. Internal threads 24 are provided at the positions fitted to the through holes 12 on the side of the cabinet 22A to be engaged with screws 14 which are penetrated through the through holes 12. Plural through holes 12 and internal threads 24 are provided. With such structure, the lenticular lens 10 can be held by hanging up the jaw parts 11 on the upper and lower sides of the cabinet 22A with an application of tension.

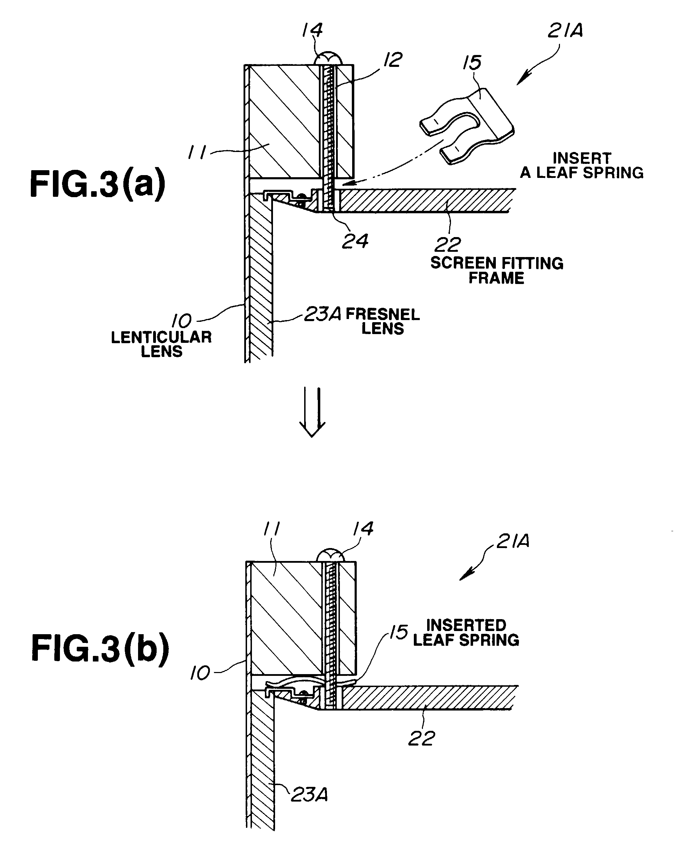

Figs. 3(a) and (b) show an attaching condition between the jaw part 11 and the cabinet 22A.

The upper end of the lenticular lens 10 is protruded from the Fresnel lens 23A. The jaw part 11 is bonded to the back of the protruded part. The jaw part 11 is attached to the side of the cabinet, that is, the outside of a fitting frame 22 of the Fresnel lens by the screw 14.

A leaf spring 15 is inserted between the jaw part 11 and the fitting frame 22. Fig. 3(a) shows the condition before the leaf spring 15 is inserted. Fig. 3(b) shows the condition that the leaf spring 15 is inserted.

By inserting the leaf spring 15 into the gap between the jaw part 11 and the fitting frame 22 of the Fresnel lens 23A, the jaw part 11 is pushed up to apply tension to the lenticular lens 10. The screw 14 is freely protrudable and retreatable and it is possible to adjust the tension according to the degree of insertion. Therefore, it is possible to apply a proper tension to the lenticular lens 10 even when the lenticular lens is extended or retreated due to temperature change.

Though not shown, the jaw part 11 is similarly provided at the lower end of the lenticular lens 10 and is attached to the lower end of the cabinet 22B. Or, a weight may be hung up on the jaw part 11 at the lower side of the lenticular lens 10 to pull down the lenticular lens 10 with the gravity of it.

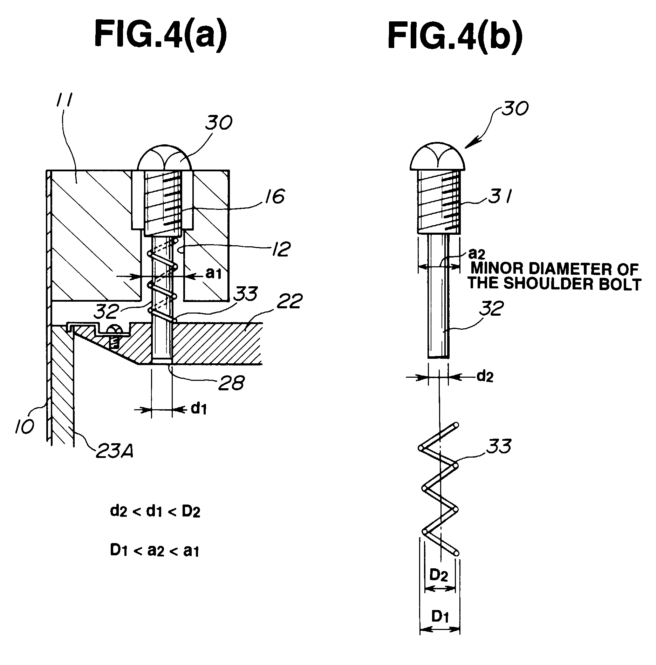

Furthermore, Figs. 4(a) and (b) show an example that a coil spring 33 is used instead of leaf spring 15. Fig. 4(a) shows the condition of screwing using the coil spring 33 and Fig. 4(b) shows an exploded view of the screw and coil spring. Though Figs. 4 (a) and (b) show only the upper part of the lenticular lens 11, the lower part is also formed similarly.

As shown in Fig. 4(a), an internal thread 16 is provided at the upper part of the jaw part 11 so that the screw 30 is engaged with this internal thread 16. The jaw part 11 is provided with a through hole 12 adjacent to the internal thread part 16. The screw 30 is formed as a stepped bolt and, as shown in Fig. 4(b), consists of an external thread part 31 and a cylindrical part 32 protruded from the external thread part 31. The external thread part 31 is engaged with the internal thread part 16 with which the jaw part 11 is provided. The cylindrical part 32 is engaged with a hole part 28 with which the fitting frame 22 is provided. The hole part 28 guides the screw 30 and controls the positions of the Fresnel lens 23A and the lenticular lens 10. Furthermore, a coil spring 33 is wound on the cylindrical part 32 and thereby tension is applied in the vertical direction of the lenticular lens 10 similarly to the leaf spring 15. Furthermore, it is possible to adjust the tension corresponding to the degree of insertion of the screw 30 similarly to the leaf spring 15.

In Figs. 4(a) and (b), the setting of the size is described with the minor diameter of the screw part 31 being a2, the inner diameter of the though hole 12 being a1 and the inner diameter of the hole part 28 being d1. That is, it is shown that the positions of the lenticular lens 10 and the Fresnel lens 23A are regulated by controlling the inner diameter of the hole part 28 to the tolerance of fitting to the cylindrical part 32 and the end of the spring 33 is supported by the fitting frame 22 by making the inner diameter d1 of the hole 28 smaller than the inner diameter D2 of the spring 33. Furthermore, it is shown that, by making the outer diameter D1 of the spring 33 smaller than the minor diameter a2 of the screw 30 so that pressure is applied to the spring 33, the bottom surface of the screw functions as a pressing part to apply pressure properly to the screw 30.

Therefore, with the structure as shown in Fig. 4(a), it is possible to adjust tension freely corresponding to the degree of insertion of the screw 30 and to control the position of the lenticular lens 10 and the Fresnel lens 23A by the hole part 28.

As mentioned above, it is possible to hold the lenticular lens 10 securely with an application of proper tension in the vertical direction.

As a variation, there is a structure that the function of the screw 30 is divided into two parts. That is, one screw is for pressing the spring 33 and the other screw is for engaging the fitting frame 22 and the lenticular lens 10 to position them. Plural screws of them are arranged in well balanced positions so that equivalent effect as before may be obtained. Thus, it is also possible to form an equivalent structure with a commercially available screw without using a special screw such as the screw 30.

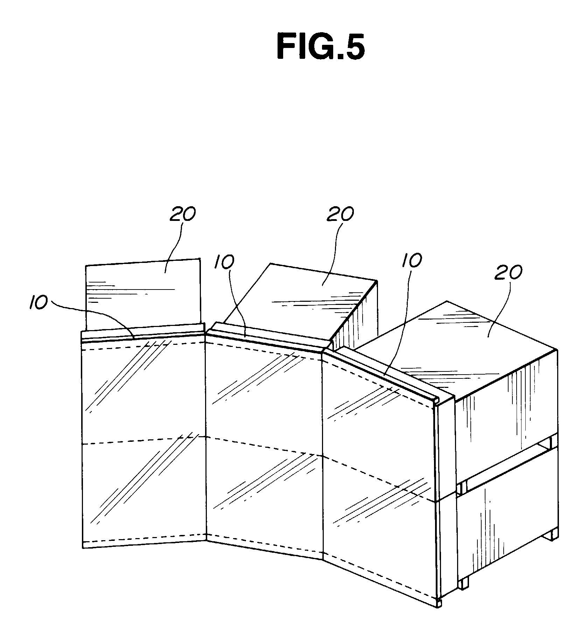

Thus, according to the present invention, it is possible to form a stereoscope by arranging the units 20 provided with the lenticular lens 10 in a circular arc form, which are divided into three parts, for example, as shown in Fig. 5.

Though the double Fresnel lenses 23A and 23B arranged in the vertical direction are described as a unit 20, it is needless to say that it is possible to form the triple or quadruple Fresnel lenses arranged in the vertical direction as long as the size of the Fresnel lens is allowed. Furthermore, of course it is possible to form double or triple Fresnel lenses arranged in the horizontal direction.

Furthermore, it is possible to use a small-sized lenticular lens 10 without using a conventional large-sized lenticular lens 100 (see Fig. 18), thereby reducing labor in transportation and eliminating the problem of the size of the entrance of building.

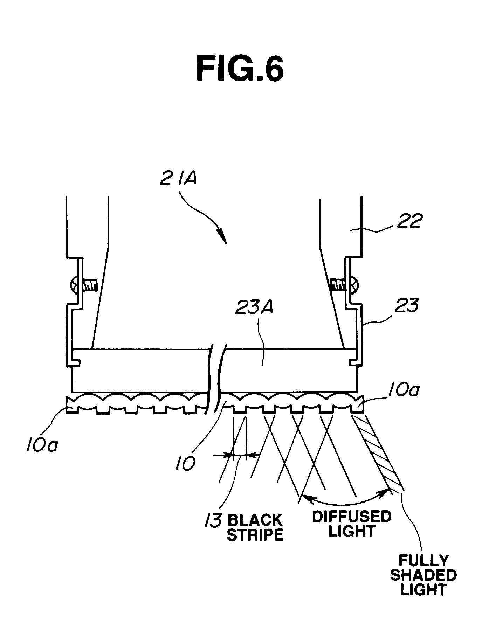

Furthermore, in Fig. 6, the placement of the black stripes of the lenticular lens 10 is limited to secure the quality of pictures at both ends on the stereoscope and at the same time to eliminate degradation of the quality of pictures due to the joint part.

In Fig. 6, the black stripes 13 are positioned at the end 10a of the lenticular lens 10 to prevent irregular reflection from occurring at this part or to make hard to be influenced by the light from the outside. Particularly, as mentioned above, since it is possible to reduce interference between each unit and to secure the quality of picture at the joint part by the black stripes 13 in case of forming a stereoscope by arranging plural units 20, a clearer image can be obtained.

Furthermore, in case of triple or quadruple Fresnel lenses arranged in the vertical direction, with said structure that applies tension only in the vertical direction, there is a possibility that the left and right ends 10a are loosened.

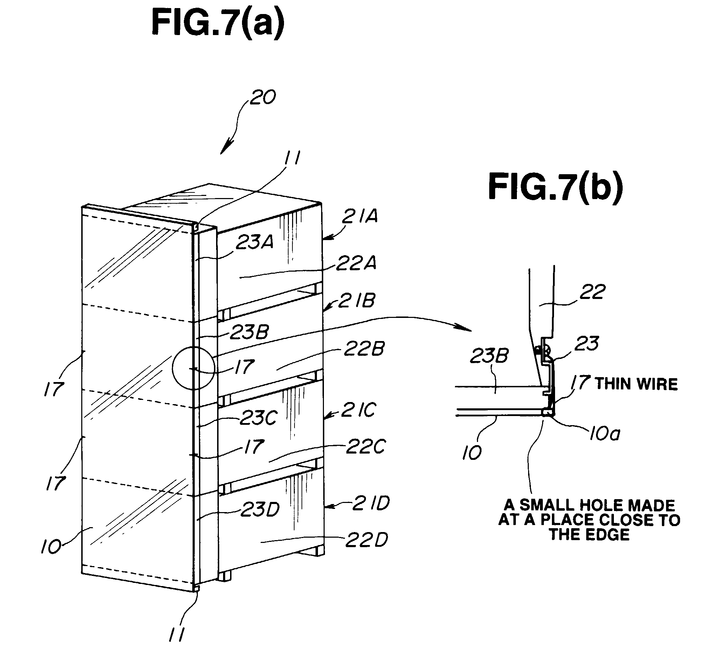

Fig. 7(a) and (b) show an embodiment to eliminate said problem. Fig. 7(a) is a perspective view showing a unit 20 in case of the quadruple Fresnel lens arranged in the vertical direction, and the left and right ends 10a of the a lenticular lens 10 are fixed by wires 17 to prevent the lenticular lenses 10 from being loosened. Fig. 7(b) is a cross section view at the part of wire 17 of Fig. 7(a).

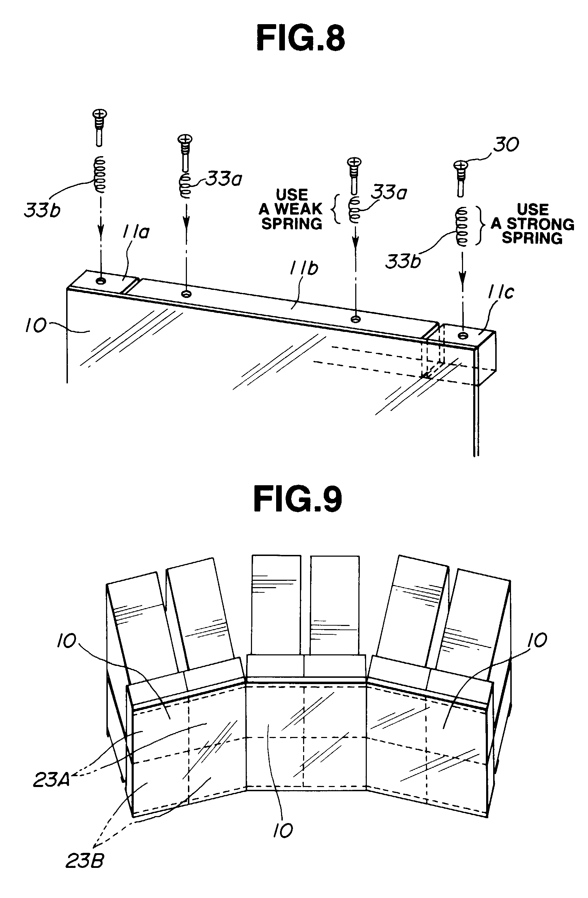

Furthermore, Fig. 8 is a variation that it is possible to further obtain tension in the horizontal direction even in case of the double Fresnel lenses arranged in the vertical direction as shown in Fig. 1.

Fig. 8 is a variation of the embodiment that the spring 33 of Fig. 4 is used. The jaw part is divided into three parts 11a, 11b and 11c. The central part 11b is the longest and both ends 11a and 11c are shorter. Furthermore, strong springs 33b are placed at both ends, a weak spring 33a is placed at the center, as a result, difference of tension is obtained. As it is, of course, necessary to prevent waving phenomenon in the horizontal direction, the long jaw 11b is provided at the central part. As both sides 11a and 11b is influenced by temperature and/or humidity more apparently than the central part 11b, the tension differs between the central part 11b and both sides 11a and 11b. The present applicant has succeeded to make the applied tension uniform in accordance with this difference.

Furthermore, Fig. 9 is an embodiment that a stereoscope is easily formed by arranging three sets in the horizontal direction as a set of units consisting of double Fresnel lenses arranged in the vertical direction and double Fresnel lenses arranged in the horizontal direction.

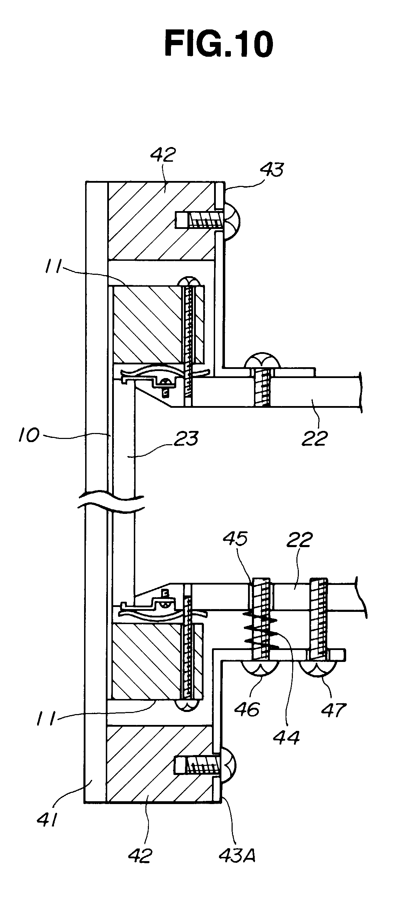

Furthermore, Fig. 10 is an embodiment that a protective layer to protect a lenticular lens is provided on the front of the lenticular lens.

The protective layer 41 made of an acrylic plate is provided on the front of the lenticular lens 10 to press the lenticular lens 10 with the holding means of the lenticular lens 10 and the protective layer 41. As the whole surface of the lenticular lens 10 is pressed from the front by the protective layer 41, the lenticular lens 10 can be pressed without being loosened. In this case, there is an advantage that the lenticular lens 10 can be pressed against the side of the Fresnel lens 23 without using said spring due to hardness of the acrylic plate itself (the acrylic plate is thicker than 3mm and is much thicker than 1mm of the lenticular lens.). Of course, it is needless to say that a spring may be used together.

A means to protect the acrylic plate 41 is formed similarly to the holding means of the lenticular lens 10, a jaw part 42 is provided with angled metal fittings 43 and 43A to be fixed to a cabinet.

As shown in Fig. 10, the upper part is fixed by a screw as it is and the lower part is devised. Though the angled metal fittings 43 are fixed to the cabinet at the upper part, the lower part is formed so that the tension is applied. That is, an internal thread is provided on the side of the angled metal fittings 43A, a fitting frame 22 is provided with a through hole 45 and the metal fittings 43A are attached to the fitting frame 22 by a screw 46. Furthermore, one more screw 47 is provided for fixing the metal fittings 43A. The fitting frame 22 is provided with the internal thread and, at this part, the metal fittings 43A is fixed to the fitting frame 22 by the screw47. Furthermore, a spring 44 is installed on the periphery of said screw 46. It is possible to obtain a larger reaction of the spring 44 by going forward a screw 46 and a smaller reaction of the spring 44 by going backward the screw 46.

With such structure, it is possible to apply proper tension to the lenticular lens 10. In stead of the structure of Fig. 10, a weight may be hung up on the jaw part 42 at the lower part to pull the lenticular lens downward.

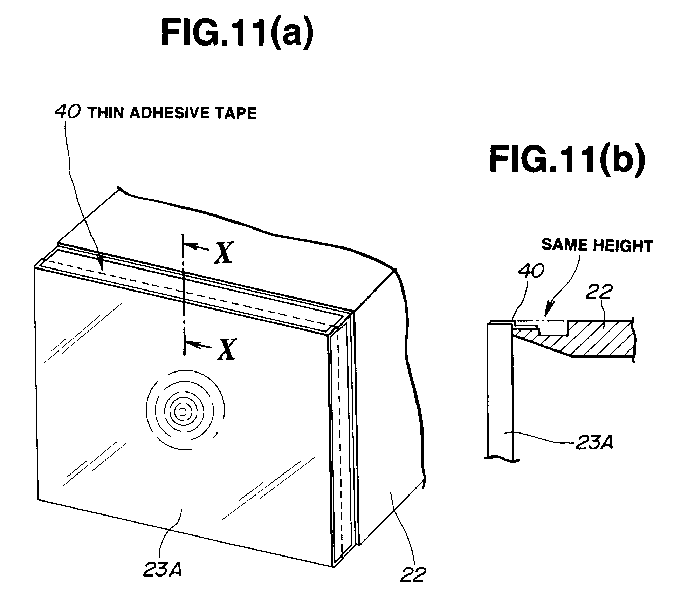

Furthermore, in the present invention, the unit displays are improved. That is, in order to cover plural unit displays with a lenticular lens 10, it is necessary to minimize the joint part of the unit displays. Here, an attaching part of a Fresnel lens 23A is improved by using an adhesive tape as shown in Fig. 11(a).

In Fig. 11(a), as the Fresnel lens 23A is much thicker than the lenticular lens 10, an adhesive tape 40 is used to press it instead of metal fittings. That is, the Fresnel lens 23A is harder than the lenticular lens 10, the Fresnel lens 23A is not loosened even if much tension is not applied. Fig. 11(b) is the cross section view taken along the line X-X of Fig. 11(a).

As shown in Fig. 11(a), the outer periphery of the Fresnel lens 23A and the fitting frame (on the side of a cabinet) 22 are connected with adhesive tape 40. In order to make the height of the fitting frame 22 and that of the outer periphery of the Fresnel lens 23A almost the same, they are connected with extremely thin tape. That is, it is possible to control the position of the Fresnel lens 23A and to hold it with adhesive tape 40 without using metal fittings.

Furthermore, with such structure, the thickness of the joint part is only that of two tapes at most. Therefore, it is possible to make the joint extremely small. Furthermore, as it is not necessary to process the Fresnel lens 23A, the structure of the Fresnel lens 23A itself becomes simple.

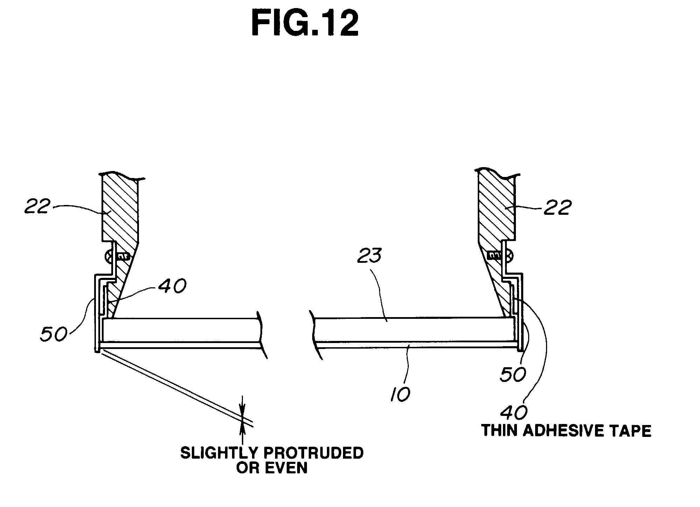

Furthermore, in order to shield light leaked from the cutting plane of the lenticular lens 10, metal fittings 50 are provided as shown in Fig. 12 to improve the quality of picture.

When forming a stereoscope according to said structure, in addition to the improvement of ends by making the arrangement of black stripes better (see Fig. 6(a)), it is possible to further prevent the light leaked from the cutting plane of the lenticular lens 10. That is, in case of units 20 arranged in the horizontal direction or in a circular arc form, the quality of picture at the end of the lenticular lens is secured. As it is not necessary to mind a machining accuracy of the cutting plane at the end of the lenticular lens 10, there is an advantage that machining becomes easy.

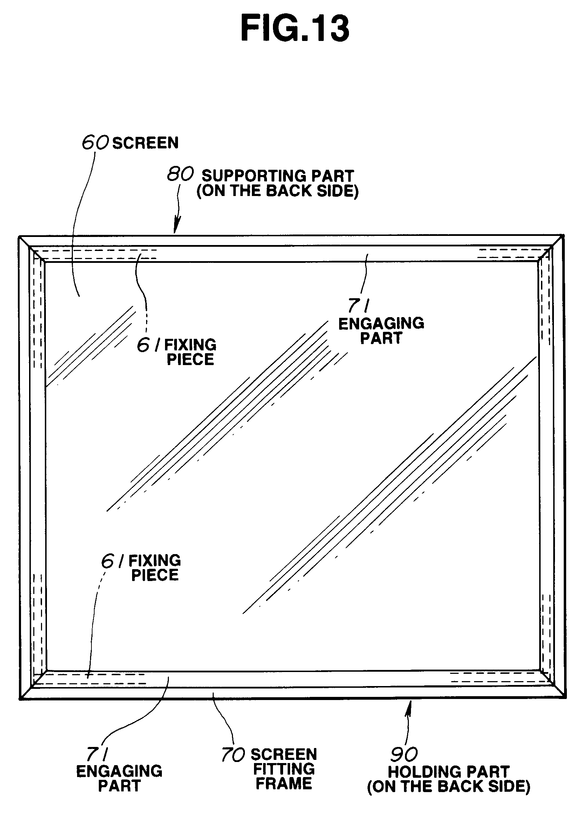

Next, referring to Figs. 13 through 17, a screen fitting structure in a projection unit using a comparatively large projecting screen will be described.

In the embodiments as shown in Figs. 13 through 17, in order to control the bending of the screen and to make possible to correspond to the middle sized screen, a simpler attaching structure is presented. Here, a screen fitting structure is presented that it is possible to apply force in the forward and backward direction of the screen.

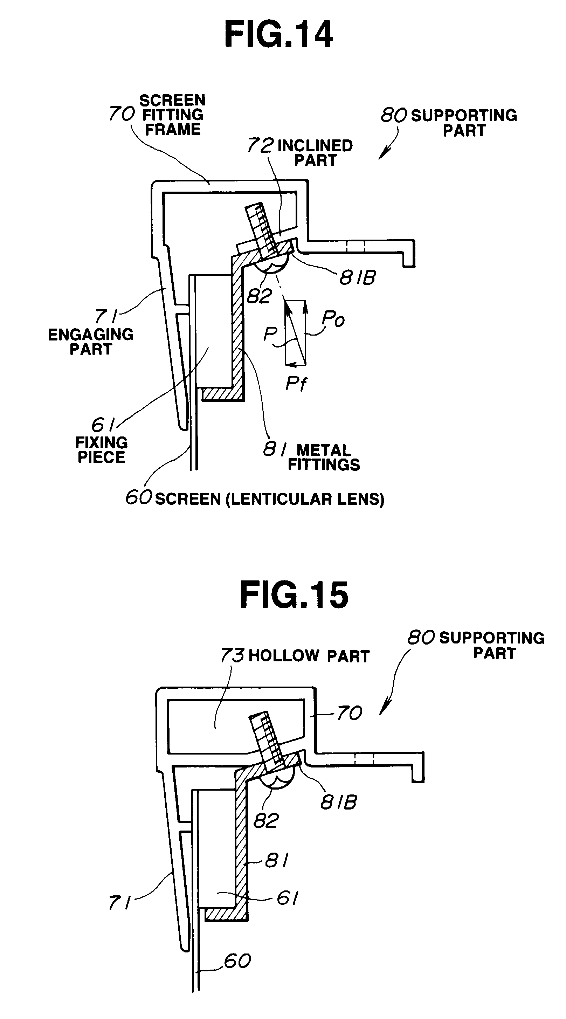

First, the whole structure is described referring to Fig. 13. Next a supporting part 80 and a holding part 90 that are characteristic parts are explained referring to Figs. 14 through 17.

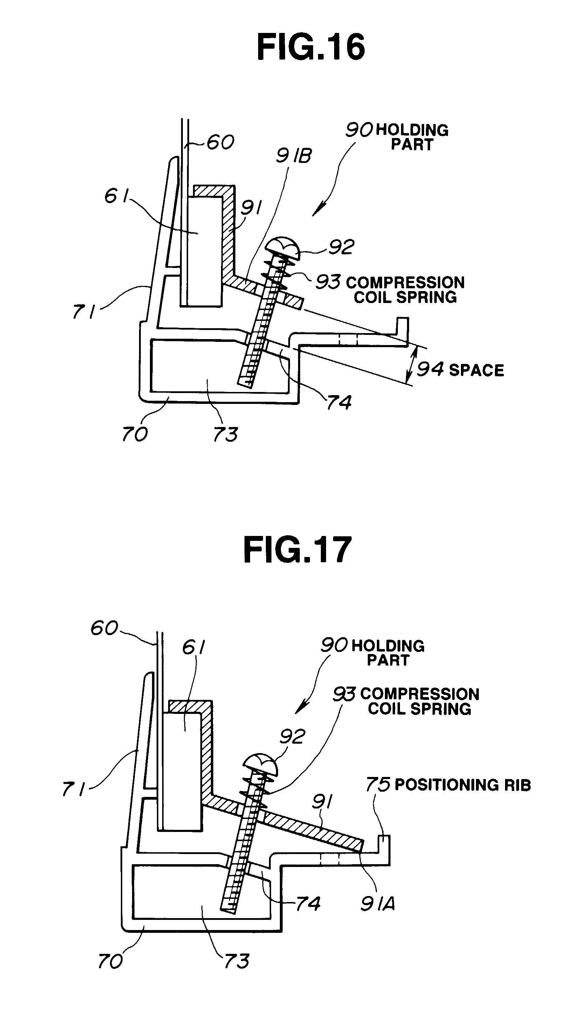

Fig. 13 is a front view of a projecting surface of a screen for a projection unit related to the present invention. A fitting frame 70 having almost the same form as the outer form of the screen 60 and a large periphery is installed so as to surround the front side and the back side of a periphery part of a screen 60. The fitting frame 70 is provided with an engaging part 71 on the front of the screen and provided with inclined parts 72 and 74 on the back side of the screen as shown in Fig. 14 and 16. The screen 60 is held by the engaging part 71 and metal fittings 81 and 91 fixed to the inclined parts 72 and 74. The supporting part 80 as a supporting means is at the upper end of the fitting frame 70, and the holding part 90 as a holding means is at the lower end of the fitting frame 70. The metal fittings 81 and 91 are provided with inclined parts 81B and 91B, and the inclined parts 81B and 91B are fixed facing to the inclined parts 72 and 74. At the supporting part 80 and the holding part 90, by joining the metal fittings 81 and 91 to the fitting frame 70 by screws 82 and 92, the screen 60 is fixed to the fitting frame 70.

The fitting frame 70 is formed in the casing shape, and the lower part is fixed to a fixing stand. Therefore, it is possible to easily support and hold the screen by the supporting part 80 and the holding part 90 fixed to the fitting frame 70.

Here the structure of the supporting part 80 and the holding part 90 is described in detail.

First, the structure of the upper end that is the supporting part 80 is explained.

Fig. 14 is a cross section view and a fixing piece 61 provided at the end of the screen 60 is supported by the fitting frame 70 and metal fittings 81 for supporting.

The end of the fixing piece 61 is supported by the L-shaped end that is one end of the metal fittings 81, and another end of the metal fittings 81 is fixed by an inclined part 72 of the fitting frame 70 . The inclined part 72 is formed by the rib structure at the fitting frame 70. The inclined part 81B of the metal fittings 81 is fitted and fixed to the inclined part 72 by a screw 82. Inside of the hole of the inclined part 72, an internal thread to be engaged with the screw 82 is provided.

By jointing the inclined parts 72 and 81B by the screw 82, the supporting part 80 supports the screen 60 with application of upward force Pa to apply tension to the screen 60 with application of outward force Pf to push out the screen 60 to securely hold the screen.

Though the inclined rib 72 is formed independently in Fig. 14, it is formed by providing a hollow part 73 at the fitting frame 70 in Fig. 15. Thus it is possible to obtain enough strength to the fitting frame 70.

Therefore, it is formed so that it is possible to make weight light and reinforce strength. Furthermore, though the inclined rib 72 is similar, as it is possible to fix the screen by inserting the screw 82 into the hollow part 73 as shown in Fig. 15, it is possible to fix it without damaging appearance.

Next a holding part 90 is described referring to Fig. 16.

A holding part 90 is for attaching a screen 60 to the lower part of the fitting frame 70. Similarly the holding part 90 is provided with an inclined part 74. Here a fixing piece 61 provided at the lower part of the screen 60 is also fixed to the inclined part 74 by using the holding metal fittings 91 and the screw 92. Therefore, it is possible to hold the screen with application of tension downward and force to push out the screen 60. Furthermore, a spring 93 is provided to apply proper tension.

Furthermore, a space part 94 is provided to be able to correspond to the contraction of the screen 60.

Therefore, it is possible to hold the screen 60 with application of proper tension to it together with a supporting part 80. Furthermore, it is possible to control the position of the lower end of the screen by the screw 92.

Furthermore, as a space 94 is generated between the end of the metal fittings 91 and a fitting frame 1, making the holding part 90 of the screen 60 a little bit unstable. Fig. 17 shows an improved embodiment.

In Fig. 17, instability of the holding metal fittings 91 is removed by providing a contact part between the end 91A of the holding metal fittings 91 and the fitting frame 70. Thus, as the holding metal fittings 91 are fixed at both ends, stable holding is made possible. Furthermore, a rib 75 for positioning is provided at the fitting frame 70 so that the holding metal fittings 91 are not protruded from the fitting frame 70. That is, though protruding may cause breaking, it is possible to prevent such protrusion with a structure as shown in Fig. 17. Furthermore, it is possible to work easily and appearance is not damaged.

Here, a space is provided between a rib 75 for positioning and the end (contacting part) 91A. This part is provided to absorb the contraction of a screen 60.

Therefore, the screen 60 and a fixing piece 61 are fixed securely without a space between the engaging part 71 and the supporting metal fittings 81 or the holding metal fittings 91.

With such structure, it is possible to hold the screen easily.

The present invention is not limited by said embodiments and it is possible to vary without departing from the spirit and the range of the present invention.

## Claims

1. In a multiscreen displaying apparatus in which plural sets of units (20) are arranged, the multiscreen displaying apparatus comprising:
a first means for forming said each set of units (20), said first means in which plural unit displays (21A, 21B) having Fresnel lenses (23A, 23B) on the front respectively are arranged in the vertical direction or in the vertical/horizontal directions,
a second means for forming a screen with said Fresnel lenses, said second means having one lenticular lens (10) opposite to said each set of units, and
a holding means for holding said lenticular lens covering the Fresnel lens of said each set of units and applying tension to the lenticular lens.

2. The multiscreen displaying apparatus according to claim 1 characterized in that:
said holding means is provided with a jaw part (11) at the upper and lower ends of said lenticular lens (10), the jaw part is hung up at the upper and lower ends of said each set of units (20), and plural springs (15) are inserted between said jaw part and the upper or lower end of said units and tension is applied vertically to said lenticular lens.

3. The multiscreen displaying apparatus according to claim 1 characterized in that:
said holding means is provided with a jaw part (11) at the upper and lower ends of said lenticular lens (10), the jaw part is engaged with a screw (30) with a spring (33) at the upper and lower ends of said each set of units, and tension is applied vertically to said lenticular lens by force of said spring.

4. The multiscreen displaying apparatus according to claim 3 characterized in that:
said jaw part of said holding means is divided into three parts (11a, 11b, 11c), the spring constant of the spring (33b) of said screw in which the jaw part positioned at both ends is engaged with said units is made larger than that of the spring (33a) of said screw in which the jaw part at the center is engaged with said units.

5. The multiscreen displaying apparatus according to claim 4 characterized in that:
the length of the central jaw part (11b) of the three parts into which said jaw part is divided is made longer than that of the jaw parts (11a, 11c) at both ends.

6. The multiscreen displaying apparatus according to claim 1 characterized in that:
said each set of units is arranged in a circular form as a whole.

7. The multiscreen displaying apparatus according to claim 1 characterized in that:
both of left and light ends of said Fresnel lenses and said lenticular lenses are attached to said unit displays by wire (17) respectively.

8. The multiscreen displaying apparatus according to claim 1 characterized in that:
the surface of said lenticular lens is covered with a protective layer (30).

9. The multiscreen displaying apparatus according to claim 1, further comprising a connecting means for connecting said Fresnel lenses and said unit displays of which said each set of units consists.

10. The multiscreen displaying apparatus according to claim 9 characterized in that:
said connecting means is adhesive tape (40).

11. The multiscreen displaying apparatus according to claim 9 characterized in that:
said connecting means is plural metal fittings (50) in which one end is fixed to the outer periphery of said unit and the other end is extended almost even to the front of said lenticular lens.

12. In a multiscreen displaying apparatus in which plural sets of units (20) are arranged, the multiscreen displaying apparatus comprising:
a first means for forming said each set of units (20), said first means in which plural unit displays (21A, 21B) having Fresnel lenses (23A, 23B) on the front respectively are arranged in the vertical direction or in the vertical/horizontal directions,
a second means for forming a screen with said Fresnel lenses, said second means having one lenticular lens (10) opposite to said each set of units, and
plural black stripes (13) provided on the front of said each lenticular lens and placed continuously from one end to the other end of said each lenticular lens in the direction that said each set of units is arranged to shield outer light partially.

13. A screen fitting structure for a projecting type image receiver in which a screen (60) is placed at a predetermined interval from a projecting unit and light of an image from said projecting unit is enlarged and projected on the front of said screen, the screen fitting structure comprising:
a casing type fitting frame (70) installed on the outer periphery of said screen;
a supporting means (80) for attaching said screen to said fitting frame by applying tension in a first direction of directing to the outer periphery of the screen and a direction of the front of the screen and
a holding means (90) including a position control means to control an attaching position of said screen to said fitting frame for attaching said screen to said fitting frame by applying tension in a direction opposite to said first direction and the direction toward the front of the screen.

14. In the fitting structure according to claim 13, the screen fitting structure characterized in that:
said supporting means (80) comprises;
a first fixing piece (61) attached to one end on the side of said first direction on the back of said screen,
an engaging part (71) united with said fitting frame and extended so as to surround the outer periphery on the side of the front of said screen,
a first inclined part (72) united with said fitting frame and extended incliningly in the direction from the back side of the outer periphery of said screen to said first fixing piece,
a supporting member (81) in which said first fixing piece is supported by one end and the other end is fixed at said first inclined part by a screw (82).

15. In the fitting structure according to claim 13, the screen fitting structure characterized in that:
said holding means (90) comprises;
a second fixing piece (61) attached to one end on the side opposite to said first direction on the back of said screen,
an engaging part (71) united with said fitting frame and extended so as to surround the outer periphery on the side of the front of said screen,
a second inclined part (74) united with said fitting frame and extended incliningly in the direction from the back side of the outer periphery of said screen to said second fixing piece,
a holding member (91) in which said second fixing piece is held by one end and the other end is fixed to said second inclined part, and
a screw (92) with a spring (93) for fixing said holding member to said second inclined part.

16. In the fitting structure according to claim 15, the screen fitting structure characterized in that:
said holding member comprises a contacting part (91A) which is in contact with said fitting frame by extending the end fixed to said second inclined part.

17. In the fitting structure according to claims 14 and 15, the screen fitting structure characterized in that the part surrounding the outer periphery of said screen of said fitting frame is made hollow (73).
